# EUROPEAN PATENT APPLICATION

(11) **EP 4 803 308 A1**
(43) Date of publication of application: **09.09.2026**
(21) Application number: 25162418.5
(22) Date of filing: 07.03.2025
(51) Int. Cl.: B32B 27/30, C08L 29/14, C09D 129/14, C09D 7/45

(54) **RECYCLED POLYVINYL BUTYRAL IN MULTILAYER SPORTS FLOORING**

(71) Applicant: BeNewtral Srl - Società Benefit, 20123 Milan (IT)
(72) Inventor: Verardi, Nicolò, 20123 Milan (IT)
(74) Representative: Rigamonti, Dorotea

(57) **Abstract**

A composition comprising rPVB (recycled polyvinyl butyral), hydroxyethyl cellulose and sodium silicate, and formulations comprising the same, is the subject matter of the present invention. A multilayer system for sports flooring comprising said formulations is also subject matter of the present invention.

## Description

### TECHNICAL FIELD

The present invention relates to multilayer sports flooring comprising rPVB (recycled polyvinyl butyral).

### BACKGROUND

PVB is an essential component of car windscreens, where it is placed to guarantee the safety and shatter-resistance of laminated glass.

Every year, more than 25 million vehicles reach the end of their service life worldwide. There is therefore an abundance of PVB waste available worldwide.

US10626241B2 describes a currently implemented process to recover the PVB contained in discarded windscreen glass, thus transforming polluting waste into a raw material, known as rPVB.

rPVB is widely used in the paint industry and the eco-leather industry.

The water-based latex of rPVB is characterised by a Minimum Film Forming Temperature (MFFT) of 0°C. Its density is 1.03 g/cm³, it has a pH of around 10.5, viscosity of around 50-200 mPa*s and particle size that is less than 300 nm.

In applications such as flooring, due to the above parameters, rPVB has disadvantages compared to typically used binders such as, acrylic, styrene-acrylic and polyurethane resins. In particular:
1. high cross-linking/ film forming speed, with increased formation of unwanted surface skins;
2. poor cold adhesion;
3. high sensitivity to water.

The need is still perceived for new ways to re-use rPVB, which thanks to recovery techniques is now widely available.

### DESCRIPTION

A composition comprising rPVB, hydroxy ethyl cellulose and sodium silicate forms first subject matter of the present invention.

In an embodiment, said hydroxy ethyl cellulose is a white powder with particle size less than 180 µm, having viscosity in the range of 4,200-5,500 mPa*s, a pH comprised between 6 and 8.5, preferably 7, and density of 0.45 g/cm³.

In said composition, said sodium silicate was selected to ensure a high molecular weight and a low weight ratio of SiO₂ to Na₂O. In an embodiment, the weight ratio between SiO₂ and Na₂O is comprised in the range 1.6-2, in a preferred form it is about 1.60.

In an embodiment, said sodium silicate has a pH comprised between 12.6 and 13.8 and viscosity comprised between 200 and 600 mPa*s.

In an embodiment, said composition comprises:
- rPVB in an amount comprised between 90 and 98%, preferably between 92 and 97%, or between 94 and 97%, or between 95 and 97%;
- Hydroxy ethyl cellulose in an amount comprised between 1.00 and 3.00%, preferably between 1.10 and 2%, or between 1.10 and 1.8%;
- Sodium silicate in an amount comprised between 1.00 and 5.00%, preferably between 1.90 and 4.00%, or between 1.90 and 3.20%.

In an embodiment, said composition comprises:
- rPVB 95.18%;
- Hydroxy ethyl cellulose 1.75%;
- Sodium silicate 3.07%.

In an embodiment, said composition comprises:
- rPVB 95.18%;
- Hydroxy ethyl cellulose 1.73%;
- Sodium silicate 3.08%.

In an embodiment, said composition comprises:
- rPVB 95.82%;
- Hydroxy ethyl cellulose 1.52%;
- Sodium silicate 2.66%.

In an embodiment, said composition comprises:
- rPVB 96.97%;
- Hydroxy ethyl cellulose 1.10%;
- Sodium silicate 1.93%.

In an embodiment, the composition comprising rPVB, hydroxy ethyl cellulose and sodium silicate has viscosity comprised in the range of 1,000 - 3,000 mPa*s, preferably 2,000 mPa*s and a pH between 8 and 10, preferably 9.

This composition is conveniently used in formulations suitable for forming multilayer sports flooring.

Therefore, formulations comprising the composition according to the present invention, adapted to be used in multilayer sports flooring, are further subject matter of the present invention.

In an embodiment, said formulation comprises the composition according to the present invention, a filler, such as micronised glass and/or round sand, a dispersing additive.

Optionally, said formulation also comprises a dye.

Said sand conveniently has a particle size in the range of 0-0.45 mm, or 0-0.25 mm.

In an embodiment, said micronised glass is obtained 100% from recycling.

In an embodiment, said formulation comprises:
- composition according to the present invention 25 - 40%, or 30-50%;
- micronised glass 15-25%, or 18-22%;
- sand 15-55, or 30-50%;
- dispersing additive 0.25-0.40%
- dye 0-5%.

Said formulation is conveniently dispersed in water. In an embodiment, it is dispersed in an amount comprised between 70 and 80%, preferably between 72 and 79% (w/w).

In an embodiment, said formulation, referred to as a "filling base", comprises the composition according to the present invention, a filler, such as micronised glass and/or round sand having a particle size of 0-0.45 mm, as well as a dispersing additive.

In an embodiment, said "filling base" formulation comprises (% weight/weight):
- composition according to the present invention 25 - 40%, or 30-38%;
- micronised glass 15-25%, or 18-22%;
- sand 0-0.45 mm 25-55, or 30-50%;
- dispersing additive 0.25-0.40%.

In an embodiment, said "filling base" formulation comprises (% weight):
- composition according to the present invention 34.06%;
- micronised glass 20.20%;
- sand 0-0.45 mm 45.41%;
- dispersing additive 0.32%.

In an embodiment, said composition according to the present invention in the "filling base" formulation comprises:
- rPVB 95.18%;
- Hydroxy ethyl cellulose 1.75%;
- Sodium silicate 3.07%.

In an embodiment, said formulation is dispersed in water. In an embodiment, said formulation is dispersed in water in a percentage of about 77.36% (w/w).

In an embodiment, said formulation, referred to as "**elastic filling base**" comprises the composition according to the present invention, a filler such as micronised glass and/or round sand having a particle size of 0-0.45 mm, a dispersing additive, a dye.

In an embodiment, said "elastic filling base" formulation comprises (% weight/weight):
- composition according to the present invention 25 - 40%, or 30-38%;
- micronised glass 15-25%, or 18-22%;
- sand 0-0.45 mm 25-55, or 30-50%;
- dispersing additive 0.25-0.40%;
- dye 1-3%.

In an embodiment, said "elastic filling base" formulation comprises (% weight):
- composition according to the present invention 33.40%;
- micronised glass 19.82%;
- sand 0-0.45 mm 44.53%;
- dispersing additive 0.32%;
- dye 1.93%.

In an embodiment, said formulation is dispersed in water. In an embodiment, said formulation is dispersed in water in a percentage of about 77.70%.

In an embodiment, said composition according to the present invention in the "elastic filling base" formulation comprises:
- rPVB 95.18%;
- Hydroxy ethyl cellulose 1.75%;
- Sodium silicate 3.07%.

In an embodiment, said formulation, referred to as "**coloured finish**" comprises the composition according to the present invention, a filler, such as micronised glass and/or round sand having a particle size of 0-0.25 mm, a dispersing additive, a dye.

In an embodiment, said "coloured finish" formulation comprises (% weight):
- composition according to the present invention 25 - 40%, or 30-38%;
- micronised glass 15-25%, or 18-22%;
- sand 0-0.25 mm 25-55, or 32-52%;
- dispersing additive 0.20-0.32%;
- dye 3-6%.

In an embodiment, said "coloured finish" formulation comprises (% weight):
- composition according to the present invention 34.93%;
- micronised glass 20.32%;
- sand 0-0.25 mm 39.84%;
- dispersing additive 0.27%;
- dye 4.65%.

In an embodiment, said formulation is dispersed in water. In an embodiment, said formulation is dispersed in water in a percentage of about 75.30%.

In an embodiment, said composition according to the present invention in said "coloured finish" formulation comprises:
- rPVB 95.82%;
- Hydroxy ethyl cellulose 1.52%;
- Sodium silicate 2.66%.

In an embodiment, said formulation, referred to as "**line coloured finish**" comprises the composition according to the present invention, a filler, such as micronised glass and/or round sand having a particle size of 0-0.25 mm, a dispersing additive, a dye.

In an embodiment, said "line coloured finish" formulation comprises (% weight):
- composition according to the present invention 30 - 60%, or 35-55%;
- micronised glass 20-32%, or 24-30%;
- sand 0-0.25 mm 12-30, or 15-23%;
- dispersing additive 0.20-0.32%;
- dye 3-6%.

In an embodiment, said "coloured finish" formulation comprises (% weight):
- composition according to the present invention 48.21%;
- micronised glass 26.96%;
- sand 0-0.25 mm 19.92%;
- dispersing additive 0.27%;
- dye 4.65%.

In an embodiment, said formulation is dispersed in water. In an embodiment, said formulation is dispersed in water in a percentage of about 75.30%.

In an embodiment, said composition according to the present invention in said "line coloured finish" formulation comprises:
- rPVB 96.97%;
- Hydroxy ethyl cellulose 1.10%;
- Sodium silicate 1.93%.

Further subject matter of the present invention is a multilayer system for sports floors.

A multilayer system usually laid on site is composed of a minimum of three layers, consisting of an elastic filling base and two finishing layers, where said multilayer is laid on a base substrate that typically consists of concrete, asphalt or an elastomeric mat.

In an embodiment, said multilayer also includes a filling base and/or one or more coloured finishing layers.

In an embodiment, said multilayer also comprises, between said base substrate and said filling base, a primer.

Said elastic filling base is conveniently made up of the "elastic filling base" formulation.

Said finishing layers are conveniently made up of the "coloured finish" formulation.

Said filling base, where present, is conveniently made up of the "filling base" formulation.

Said coloured finishing layers, where present, are conveniently made up of the "line coloured finish" formulation.

In an embodiment, the subject matter of the present invention is the use of a composition according to the present invention in formulations for multilayer sports flooring.

In an embodiment, the subject matter of the present invention is a method for installing multilayer sports flooring, wherein said method comprises:
- Providing an elastic filling base formulation, a coloured finish formulation and optionally a filling base formulation and/or a line coloured finish formulation;
- Optionally, diluting said formulations with a percentage between 10 and 15% water (w/w), mixing appropriately;
- Optionally, spreading a coat of filling base on a base substrate;
- Spreading a coat of elastic filling base on a base substrate, possibly already covered with a coat of filling base;
- Spreading two coats of coloured finish onto said coat of elastic filling base;
- Optionally, spreading a coat of line coloured finish.
- Between coats, leaving to dry, e.g. 12h at 23°C 50% RH, or 2-3 hours before the next application.

By way of example, a multilayer according to the present invention is detailed herein, comprising:
1. Filling base
2. Elastic filling base
3. Coloured finish
4. Coloured finish
5. Play lines.

Conveniently, said "coloured finish" formulation is applied in two steps, resulting in a multilayer comprising layer 3 and layer 4 of coloured finish.

Advantageously, the fine particle size characterising the "coloured finish" formulation, and the application of the same in two successive steps, allow for complete occlusion of the gaps left by the filling base and elastic filling base coats, creating a uniform surface.

Advantageously, the "line coloured finish" formulation is less viscous than the coloured finish layers due to the greater amount of composition according to the present invention included therein, and consequently quicker to lay.

In an embodiment, a multilayer was formed comprising:
1. Filling base, comprising
   - composition according to the present invention 34.06%;
   - micronised glass 20.20%;
   - sand 0-0.45 mm 45.41%;
   - dispersing additive 0.32%
   where said filling base is dispersed in water at a percentage of approximately 77.36%.
2. Elastic filling base, comprising:
   - composition according to the present invention 33.40%;
   - micronised glass 19.82%;
   - sand 0-0.45 mm 44.53%;
   - dispersing additive 0.32%;
   - dye 1.93%
   where said elastic filling base is dispersed in water at a percentage of approximately 77.70%.
3. Coloured finish, comprising:
   - composition according to the present invention 34.93%;
   - micronised glass 20.32%;
   - sand 0-0.25 mm 39.84%;
   - dispersing additive 0.27%;
   - dye 4.65%
   where said coloured finish is dispersed in water in a percentage of approximately 75.30%.
4. Coloured finish, comprising:
   - composition according to the present invention 34.93%;
   - micronised glass 20.32%;
   - sand 0-0.25 mm 39.84%;
   - dispersing additive 0.27%;
   - dye 4.65%
   - where said coloured finish is dispersed in water in a percentage of approximately 75.30%.
5. Play lines, comprising
   - composition according to the present invention 48.21%;
   - micronised glass 26.96%;
   - sand 0-0.25 mm 19.92%;
   - dispersing additive 0.27%;
   - dye 4.65%
   - where said line coloured finish is dispersed in water in a percentage of approximately 75.30%.

The stability of the multilayer was tested as follows:
Resistance to liquids, tested according to the reference standard UNI EN ISO 2812-3: no degradation.

Thermal resistance, tested according to the reference standard UNI EN 1062-11: no degradation.

Dry abrasion resistance (Taber), tested according to reference standard EN 5470-1: < 2 g.

Skid resistance (SRT), tested according to EN 1436 and EN 13036-4: S3; SRT=55.

UV resistance (colour change after 1000 hours of exposure), tested according to the reference standard UNI EN 1062-11: DeltaE<0.8.

The authors of the present invention have surprisingly demonstrated that the combination of rPVB with hydroxy ethyl cellulose and sodium silicate, in the quantities and under the conditions described above, allows rPVB latex to be used without its characteristics impairing its applicability in the field of multilayer coatings, e.g. suitable for both indoor and outdoor sports floors.

In particular, the combination surprisingly avoids rapid film forming, ensures improved adhesion to the substrate, and finally allows a glassy patina to cover the system when solidified, going so far as to eliminate the characteristic sensitivity of solidified rPVB latexes to water. This last aspect is of paramount importance, especially in outdoor flooring, which is subjected to the action of humidity and dew cycles, potentially damaging to rPVB.

Silicate in the quantities according to the present invention has been shown to be an essential component: its absence, or its presence in quantities below the range claimed here, has been shown to result in poor adhesion to the substrate, and from the very first layer the material laid showed a tendency to be removed during subsequent laying steps.

By using higher silicate concentrations than those proposed by the composition according to the present invention, an undesirable demixing and phase separation effect was observed between the silicate component and the rPVB latex.

It is also essential that the concentration of cellulose remains within the range claimed here: a higher dosage, with the same amount of silicate, resulted in the material drying out already during the production stages, which made it objectively impossible to process it, except by adding large quantities of water, which, however, resulted in a worsening of the overall properties of the system; on the other hand, a lower dosage of cellulose, with the same amount of silicate, resulted in a very liquid material lacking cohesion, so that it could be spread onto a substrate to form a uniform mass.

## Claims

1. A composition comprising:
- rPVB in an amount comprised between 90 and 98%, preferably between 92 and 97%, or between 94 and 97%;
- Hydroxy ethyl cellulose in an amount comprised between 1.00 and 3.00%, preferably between 1.10 and 2%;
- Sodium silicate in an amount comprised between 1.00 and 5.00% preferably between 1.90 and 4.00%.

2. The composition according to claim 1 comprising:
- rPVB in an amount comprised between 95 and 97%;
- Hydroxy ethyl cellulose in an amount comprised between 1.10 and 1.8%;
- Sodium silicate in an amount comprised between 1.90 and 3.20%.

3. A formulation for use in multilayer sports floors comprising (% w/w):
- the composition according to claim 1 = 25-40%, 30-50%;
- glass = 15-25%, or 18-22%;
- sand = 15-55, or 30-50%;
- dispersing additive = 0.25-0.40%
- dye = 0-5%.

4. The formulation according to claim 3, referred to as "**filling base**" comprising (%w/w)
- composition according to claim 1 = 30-38%;
- micronised glass = 18-22%;
- sand = 30-50%;
- dispersing additive 0.25-0.40%;
where said sand has a particle size comprised between 0 - and 0.45 mm.

5. The formulation according to claim 3, said "**elastic filling base**" comprising (% w/w):
- composition according to claim 1 = 30-38%;
- micronised glass = 18-22%;
- sand = 30-50%;
- dispersing additive = 0.25-0.40%;
- dye = 1-3%;
where said sand has a particle size comprised between 0 - and 0.45 mm.

6. The formulation according to claim 3, said "**coloured finish**" comprising (% w/w):
- composition according to claim 1 = 30-38%;
- micronised glass = 18-22%;
- sand = 32-52%;
- dispersing additive = 0.20-0.32%;
- dye = 3-6%;
where said sand has a particle size comprised between 0 and 0.25 mm.

7. The formulation according to claim 3, said "**line coloured finish**" comprising (% w/w):
- composition according to claim 1 = 35-55%;
- micronised glass = 24-30%;
- sand = 15-23%;
- dispersing additive = 0.20-0.32%;
- dye = 3-6%;
where said sand has a particle size comprised between 0 and 0.25 mm.

8. The formulation according to one of claims 3 to 7 that is dispersed in water, in an amount comprised between 70 and 80 %, preferably between 72 and 79 % (w/w).

9. A multilayer system for sports floors comprising the formulation according to one of claims 3 to 8.

10. The multilayer system according to claim 9 comprising at least three layers, consisting of an elastic filling base and two finishing layers, where said multilayer is laid on a base substrate that typically consists of concrete, asphalt or an elastomeric mat.

11. The multi-layer system according to claim 9, which also includes a filling base and/or one or more coloured finishing layers.

12. The multilayer system according to one of claims 9 to 11 comprising 5 layers:
i. Filling base
ii. Elastic filling base
iii. Coloured finish
iv. Coloured finish
v. Play lines
wherein said layer i) comprises the "filling base" formulation according to claim 4, said layer ii) comprises the "elastic filling base" formulation according to claim 5, said layers iii) and iv) comprise the "coloured finish" formulation according to claim 6, said layer v) comprises the "line coloured finish" formulation according to claim 7.
